# EUROPÄISCHE PATENTANMELDUNG

(11) **EP 3 553 618 A1**
(43) Veröffentlichungstag der Anmeldung: **16.10.2019**
(21) Anmeldenummer: 19000170.1
(22) Anmeldetag: 04.04.2019
(51) Int. Cl.: G05D 1/00, A63B 47/02

(54) **ARBEITSVORRICHTUNG**

(30) Priorität: 05.04.2018 EP 18165954
(71) Anmelder: Meadow Robotics GmbH, 68789 St. Leon-Rot (DE)
(72) Erfinder: Deschner, Pascal, 69151 Neckargemünd (DE); Lang, Martin, 68789 St. Leon-Rot (DE); Stoll, Michael, 68723 Schwetzingen (DE)

(57) **Zusammenfassung**

Im Hinblick auf eine flexible und sichere Durchführung von zu erledigenden Arbeiten ist eine Arbeitsvorrichtung, insbesondere zur Durchführung einer oder mehrerer Arbeiten im Außeneinsatz, mit einer Bedieneinrichtung, einer Cloudserviceeinrichtung (1), einer Basisstation (2) und mindestens einer mobilen Arbeitseinheit (3) bereitgestellt.
Zum Betrieb der Arbeitsvorrichtung und/oder zur Steuerung der mindestens einen Arbeitseinheit (3) erforderliche Daten und/oder Parameter von der Bedieneinrichtung über eine erste Kommunikationsverbindung an die Cloudserviceeinrichtung (1) übertragbar sind, wobei die Daten und/oder Parameter von der Cloudserviceeinrichtung (1) an die Basisstation (2) und Arbeitsdaten von und/oder bezüglich der mindestens einen Arbeitseinheit (3) von der Basisstation (2) zu der Cloudserviceeinrichtung (1) über eine zweite Kommunikationsverbindung übertragbar sind und wobei ein geeigneter Datenaustausch hinsichtlich der Daten und/oder Parameter und/oder der Arbeitsdaten zwischen der Basisstation (2) und der mindestens einen Arbeitseinheit (3) über eine dritte Kommunikationsverbindung realisiert ist.

## Beschreibung

Die Erfindung betrifft eine Arbeitsvorrichtung, insbesondere zur Durchführung einer oder mehrerer Arbeiten im Außeneinsatz, wobei die Arbeitsvorrichtung eine Bedieneinrichtung und mindestens eine mobile Arbeitseinheit aufweist.

Arbeitsvorrichtungen der eingangs genannten Art sind aus der Praxis bekannt und existieren in unterschiedlichen Ausführungsformen. Beispielsweise sind Arbeitsvorrichtungen bekannt, welche eigenständige oder angehängte Arbeitsgeräte betreiben, transportieren oder bewegen können und von einem Menschen gesteuert werden. Zum Einsammeln von runden Gegenständen, beispielsweise Bällen, Nüssen oder Äpfeln, sind Vorrichtungen aus mehreren aneinander gereihten Scheiben bekannt, welche die Gegenstände beim Überfahren einklemmen.

Die herkömmlichen Lösungen werden von Menschen gesteuert und ziehen daher einen hohen Personaleinsatz nach sich. Damit einhergehend sind die eingesetzten Vorrichtungen und Maschinen entsprechend groß ausgeführt, damit der Bediener in gleicher Zeit mehr Arbeit verrichten kann. Allerdings ist mit der Größe auch eine Auffälligkeit und damit Störung der Umwelt verbunden.

Darüber hinaus sind Arbeiten im Außenbereich meistens stark witterungsabhängig, womit das Arbeitsaufkommen nicht gleichmäßig, sondern mit starken Schwankungen behaftet ist. Dies macht die Personalplanung ungleich schwieriger als es bei Arbeiten in einem Innenraum der Fall ist.

Bisherige autonome Systeme für den Außeneinsatz, beispielsweise Mähsysteme, sind meist auf die Installation von Induktionsschleifen oder Technologien mit ähnlichem Ausbringungs- und Installationsaufwand angewiesen. Diese Lösungen sind fehleranfällig bei mechanischen Einwirkungen, personalintensiv bei der Installation und sehr unflexibel im Hinblick auf Änderungen, die sich aus sich kurzfristig ergebenden Veränderungen von Randbedingungen beim Arbeitseinsatz ergeben.

Der vorliegenden Erfindung liegt daher die Aufgabe zugrunde, eine Arbeitsvorrichtung anzugeben, mit der durchzuführende Arbeiten flexibel und sicher mit konstruktiv einfachen Mitteln erledigt werden können.

Erfindungsgemäß wird die voranstehende Aufgabe durch eine Arbeitsvorrichtung mit den Merkmalen des Anspruchs 1 gelöst. Danach ist eine Arbeitsvorrichtung, insbesondere zur Durchführung einer oder mehrerer Arbeiten im Außeneinsatz, mit einer Bedieneinrichtung, einer Cloudserviceeinrichtung, einer Basisstation und mindestens einer mobilen Arbeitseinheit angegeben, wobei zum Betrieb der Arbeitsvorrichtung und/oder zur Steuerung der mindestens einen Arbeitseinheit erforderliche Daten und/oder Parameter von der Bedieneinrichtung über eine erste Kommunikationsverbindung an die Cloudserviceeinrichtung übertragbar sind, wobei die Daten und/oder Parameter von der Cloudserviceeinrichtung an die Basisstation und Arbeitsdaten von und/oder bezüglich der mindestens einen Arbeitseinheit von der Basisstation zu der Cloudserviceeinrichtung über eine zweite Kommunikationsverbindung übertragbar sind und wobei ein geeigneter Datenaustausch hinsichtlich der Daten und/oder Parameter und/oder der Arbeitsdaten zwischen der Basisstation und der mindestens einen Arbeitseinheit über eine dritte Kommunikationsverbindung realisiert ist.

In erfindungsgemäßer Weise ist zunächst erkannt worden, dass durch eine geschickte Auswahl und Kopplung einzelner Komponenten die voranstehende Aufgabe auf überraschend einfache Weise gelöst wird. Dabei bildet die erfindungsgemäße Arbeitsvorrichtung ein System zur sicheren und flexiblen Durchführung erforderlicher Arbeiten.

Über die Bedieneinrichtung sind zum Betrieb der Arbeitsvorrichtung und/oder zur Steuerung der mindestens einen Arbeitseinheit erforderliche Daten und/oder Parameter von der Bedieneinrichtung über eine erste Kommunikationsverbindung an die Cloudserviceeinrichtung übertragbar. Derartige Daten und/oder Parameter können unterschiedlichste Informationen zum Betrieb und/oder zur Steuerung der Arbeitsvorrichtung und/oder der mindestens einen Arbeitseinheit umfassen. Von der Cloudserviceeinrichtung können die Daten und/oder Parameter über eine zweite Kommunikationsverbindung an die Basisstation übertragen werden. Im Gegenzug können Arbeitsdaten von und/oder bezüglich der mindestens einen Arbeitseinheit von der Basisstation zu der Cloudserviceeinrichtung über diese zweite Kommunikationsverbindung übertragen werden. Ein geeigneter Datenaustausch hinsichtlich der Daten und/oder Parameter und/oder der Arbeitsdaten zwischen der Basisstation und der mindestens einen Arbeitseinheit ist über eine dritte Kommunikationsverbindung realisiert.

Mit der erfindungsgemäßen Arbeitsvorrichtung ist ein individuell angepasster Betrieb beim Durchführen erforderlicher Arbeiten ermöglicht, wobei durch den möglichen Einsatz mehrerer Arbeitseinheiten ein großes Arbeitspensum erledigt werden kann, ohne dass ein sehr großes einzelnes und damit optisch störendes Arbeitsgerät für das gleiche Arbeitspensum realisiert werden muss. Des Weiteren bietet die Möglichkeit des Einsatzes mehrerer Arbeitseinheiten eine schnelle Anpassung an schwankende zu erledigende Arbeitsvolumina.

Folglich ist mit der erfindungsgemäßen Arbeitsvorrichtung eine Arbeitsvorrichtung angegeben, mit der durchzuführende Arbeiten flexibel und sicher mit konstruktiv einfachen Mitteln erledigt werden können.

Im Hinblick auf eine besonders sichere und flexibel anpassbare Arbeitsweise der Arbeitsvorrichtung kann mindestens eine der ersten, zweiten und dritten Kommunikationsverbindungen und können vorzugsweise sämtliche Kommunikationsverbindungen drahtlos, kabelgebunden oder über eine Lichtwellenleitung und weiter vorzugsweise bidirektional realisiert sein. Je nach individuellem Erfordernis kann eine der genannten Realisierung gewählt werden, um eine je nach Erfordernis möglichst optimale Durchführung einer erforderlichen Arbeit zu gewährleisten. Dabei kann beispielsweise eine der Kommunikationsverbindungen drahtlos und eine andere kabelgebunden arbeiten. Beliebige Realisierungsvarianten sind möglich.

Weiterhin im Hinblick auf eine sehr einfache und sichere Durchführung einer zu erledigenden Arbeit kann die Bedieneinrichtung ein mobiles oder nicht mobiles Endgerät sein. Auch hier kann auf den individuellen Anwendungsfall abgestellt werden. Dabei kann die Bedieneinrichtung an der Basisstation, an der mindestens einen Arbeitseinheit oder an einer anderen Komponente der Arbeitsvorrichtung angeordnet und/oder zur Datenübertragung mit dem Internet ausgebildet sein.

Bei einer konkreten Ausführungsform können oder kann die Basisstation und/oder die mindestens eine Arbeitseinheit ein GNSS, Globales NavigationsSatellitenSystem, zur Positionsbestimmung der Basisstation und /oder der mindestens einen Arbeitseinheit und/oder eine Schnittstelle zum Internet und/oder mindestens einen Sensor zur Detektion insbesondere einer Temperatur, einer Windgeschwindigkeit, einer Niederschlagsmenge, einer Umgebungsfeuchte oder weiterer Umgebungsparameter aufweisen. Beispielsweise kann eine Steuerung der mindestens einen Arbeitseinheit auf oder über eine Fläche ausschließlich über eine derartige satellitenbasierte Positionsbestimmung erfolgen.

Hinsichtlich einer besonders flexiblen und an vorliegende und/oder wechselnde Umgebungsbedingungen angepasste Arbeitsausführung kann mindestens ein über den mindestens einen Sensor detektierter Umgebungsparameter bei der Steuerung der mindestens einen Arbeitseinheit berücksichtigt werden.

Die mindestens eine Arbeitseinheit kann einen Antrieb zur sicheren Positionierung und Bewegung der Arbeitseinheit auf beispielsweise einer zu bearbeitenden Fläche aufweisen. Alternativ oder zusätzlich hierzu kann die mindestens eine Arbeitseinheit mindestens eine Kopplungseinrichtung zum Ankoppeln mindestens eines oder verschiedener Arbeitsgeräte aufweisen. Dabei kann die mindestens eine Arbeitseinheit quasi ein Grundgerät als Basiseinheit für verschiedene Arbeitsgeräte zur Durchführung unterschiedlicher Arbeiten bilden.

In vorteilhafter Weise kann die mindestens eine Arbeitseinheit mindestens ein angekoppeltes Arbeitsgerät steuern und/oder zur Kommunikation mit diesem Arbeitsgerät ausgebildet sein.

Im Hinblick auf eine besonders flexible Ausgestaltung der Arbeitsvorrichtung kann die Arbeitsvorrichtung eine elektrische Ladestation, eine Reinigungsstation, eine Servicestation und/oder weitere Funktionsstationen aufweisen. Eine derartige Ladestation kann zur Aufladung und vorzugsweise zur Pflege eines Akkumulators der mindestens einen Arbeitseinheit dienen. Eine Reinigungsstation kann sowohl für die Reinigung der mindestens einen Arbeitseinheit als auch für die Reinigung von an diese Arbeitseinheit angekoppelten Geräten ausgebildet sein.

Zur Erfassung und Bereitstellung von für den Betrieb der Arbeitsvorrichtung und/oder zur Steuerung der mindestens einen Arbeitseinheit erforderlichen Daten und/oder Parameter und/oder Arbeitsdaten von und/oder hinsichtlich der mindestens einen Arbeitseinheit kann die Ladestation und/oder die Reinigungsstation und/oder die Servicestation mindestens einen Sensor zur Detektion einer Anwesenheit und/oder Positionierung einer Arbeitseinheit und/oder eines Ladezustands und/oder eines Funktionszustands eines Akkus einer Arbeitseinheit aufweisen. Hierdurch ist ein besonders sicherer und flexibler Betrieb der Arbeitsvorrichtung gewährleistet.

Hinsichtlich eines besonders einfachen Betriebs der Arbeitsvorrichtung können sämtliche zum Betrieb der Arbeitsvorrichtung und/oder der mindestens einen Arbeitseinheit erforderlichen Daten in der Cloudserviceeinrichtung gespeichert sein. Dies ermöglicht eine sichere Steuerung der Arbeitsvorrichtung und der mindestens einen Arbeitseinheit auf Basis eines möglichst umfangreichen Datenmaterials, das zentral gespeichert ist.

Zur Gewährleistung einer sicheren Durchführung mindestens einer Arbeit auch bei einer Störung einer der Kommunikationsverbindungen oder gar einem Ausfall der Cloudserviceeinrichtung können für die Durchführung mindestens einer Arbeit erforderliche Daten und/oder Parameter in der Basisstation gespeichert sein. Dabei kann die Basisstation auf die gespeicherten Daten und/oder Parameter zurückgreifen, um eine sichere Durchführung oder einen sicheren Abschluss einer Arbeit durch die mindestens eine Arbeitseinheit zu gewährleisten, ohne dass eine Kommunikationsverbindung zwischen der Cloudserviceeinrichtung und der Basisstation bestehen muss.

Im Hinblick auf eine besonders einfache Steuerung der mindestens einen Arbeitseinheit oder im Hinblick auf einen besonders einfachen Betrieb der Arbeitsvorrichtung kann die Basisstation eine Schnittstelle zum vorzugsweise bidirektionalen Datenaustausch aufweisen. Über diese Schnittstelle können für den Betrieb oder die Steuerung erforderliche Informationen von der Basisstation beispielsweise über das Internet bezogen werden und können Daten und/oder Parameter zur Steuerung der mindestens einen Arbeitseinheit - auf kurzem Weg - auch ohne die Cloudserviceeinrichtung der Arbeitsvorrichtung und damit auch der mindestens einen Arbeitseinheit zugeführt werden. Alternativ oder zusätzlich hierzu können Informationen über die Arbeitsvorrichtung über die Basisstation an vorgebbare Empfänger ausgegeben werden.

Die Basisstation kann in besonders vorteilhafter Weise eine Koordinierungsfunktion für die mindestens eine Arbeitseinheit oder mehrerer Arbeitseinheiten ausführen. Hierzu kann die Basisstation für eine Koordination einer oder mehrerer durchzuführender Arbeiten hinsichtlich einer oder mehrerer Arbeitseinheiten und/oder Arbeitsgeräte ausgebildet sein.

Bei einer vorteilhaften Anwendung kann die Arbeitsvorrichtung zum Einsammeln von runden Gegenständen, insbesondere von Golfbällen, ausgebildet sein, wobei vorzugsweise durch die Basisstation auf Basis erfasster und/oder übermittelter Arbeitsdaten von der mindestens einen Arbeitseinheit eine Auswertung hinsichtlich der Verteilung der runden Gegenstände auf einer Fläche und weiter vorzugsweise eine Optimierung einer Verteilung von Arbeitsaufträgen an die mindestens eine Arbeitseinheit oder mehrere Arbeitseinheiten durchführbar ist.

Zur Gewährleistung eines besonders sicheren Einsammelns von runden Gegenständen kann die mindestens eine Arbeitseinheit eine Sammelrolle aufweisen, wobei vorzugsweise die Sammelrolle aus zwei Sammeleinrichtungen ausgebildet ist.

Des Weiteren ist eine mobile Arbeitseinheit mit einem Antrieb oder einer Antriebseinheit beansprucht, wobei die Arbeitseinheit insbesondere zum Einsatz bei einer Arbeitsvorrichtung gemäß diesem Dokument geeignet ist.

Im Folgenden werden nochmals vorteilhafte Aspekte und Eigenschaften von Ausführungsbeispielen der erfindungsgemäßen Arbeitsvorrichtung beispielhaft erläutert:
Ein als System ausgebildetes Ausführungsbeispiel der erfindungsgemäßen Arbeitsvorrichtung kann aus mehreren Komponenten bestehen, nämlich aus mindestens einer Cloudserviceeinrichtung, einer Basisstation, einer mobilen Arbeitseinheit, beispielsweise ein Rover, und einer Bedieneinrichtung in Form beispielsweise eines Endgeräts. Das System kann auch weitere Komponenten in beliebiger Zahl umfassen, wie beispielsweise eine elektrische Ladestation, eine Reinigungsstation, eine Servicestation oder auch weitere Rover oder Arbeitseinheiten, welche optional sind.

Die Cloudserviceeinrichtung kann aus einem oder mehreren Datenbanksystemen bestehen, die auf einem oder mehreren Servern ausgeführt werden. Diese Server sind mit dem Internet verbunden und damit quasi unabhängig von Ort und Zeit verfügbar. Die Datenbanksysteme verfügen dabei über Schnittstellen, die einen Zugriff von externen Anwendungen erlauben. Hierüber ist es möglich, Informationen auszulesen, einzugeben und zu ändern.

Die Basisstation ist üblicherweise eine nicht mobile Einheit. Diese Basisstation kann über verschiedene Sensoren verfügen, beispielsweise Temperatur-, Wind-, Niederschlags- und Feuchtesensoren, um die Umgebungsbedingungen detektieren und überwachen zu können. Die Basisstation kann über Schnittstellen mit anderen Geräten, welche nicht zum System gehören, Daten austauschen und die erhaltenen Informationen bei der Planung von Arbeiten berücksichtigen. Weiterhin verfügt die Basisstation über mindestens ein GNSS zur Positionsbestimmung, welches auch als differenzielles GNSS oder auch als GNSS mit Echtzeitkinematik ausgeführt sein kann. Außerdem verfügt die Basisstation über Funksysteme, die einen Datenaustausch mit weiteren Komponenten ermöglichen. Weiterhin verfügt die Basisstation über Einrichtungen, welche den Datenaustausch mit dem Internet ermöglichen, wobei diese kabellos, kabelgebunden, über Lichtwellenleitung oder anders ausgeführt sein können. Die Basisstation kann alternativ oder zusätzlich EDV-Systeme zur Signalverarbeitung aufweisen.

Die mindestens eine Arbeitseinheit kann eine mobile Einheit, Rover, mit eigenem Antrieb sein, die sich aus eigener Kraft fortbewegen kann. An den Rover können verschiedene Arbeitsgeräte angebaut werden. Die mobile Einheit kann über frei konfigurierbare Schnittstellen mit den angebauten Arbeitsgeräten kommunizieren und diese steuern. Dieser Rover kann über verschiedene Sensoren verfügen, beispielsweise zur Erfassung der Umgebung, sowie über mindestens ein GNSS zur Bestimmung der Position, welches auch als differenzielles GNSS oder auch als GNSS mit Echtzeitkinematik ausgeführt sein kann. Der Rover verfügt ebenso über integrierte EDV-Systeme zur Signalverarbeitung. Der Rover ist damit in der Lage, selbstständig Entscheidungen zu treffen, um seine Arbeitsanweisungen bestmöglich zu erfüllen. Des Weiteren verfügt der Rover über Funksysteme, die einen Datenaustausch mit weiteren Komponenten ermöglichen.

Das System kann über eine ausführbare Anwendung auf einem EDV Gerät bedient werden. Dieses Gerät kann ein mobiles Endgerät, beispielsweise Smartphone, Tablet, Laptop o. ä., ein nicht mobiles Endgerät, beispielsweise PC, Server o. ä., oder ein EDV Gerät sein, welches sich an einer der weiteren Systemkomponenten, beispielsweise Basisstation, Rover o. ä. befindet. Das Gerät zum Bedienen des Systems oder die Bedieneinrichtung verfügt dabei über Einrichtungen die den Datenaustausch mit dem Internet ermöglichen.

Das System kann eine elektrische Ladestation umfassen, welche bei einem akkubetriebenen Rover die Aufladung des Akkus ermöglicht. Die Ladestation kann über verschiedene Sensoren verfügen, welche die Anwesenheit und Positionierung des Rovers, den Lade- sowie den Gesundheitszustand - Allgemeinzustand - des Akkus, eine mögliche Manipulation, eine fehlerhafte Kontaktierung, sowie den Ladevorgang detektieren und überwachen. Die Ladestation kann über Einrichtungen verfügen, welche das korrekte Anfahren durch den Rover unterstützt oder ermöglicht. Die Energieübertragung von der Ladestation zum Rover kann über Kontakte oder kontaktlos, beispielsweise durch Induktion, erfolgen.

Das System kann eine Reinigungsstation umfassen, welche die Reinigung des Rovers und/oder der am Rover befindlichen Arbeitsgeräte ermöglicht. Die Reinigungsstation kann über verschiedene Sensoren verfügen, welche die Anwesenheit und Positionierung des Rovers und die Verschmutzung detektieren und überwachen. Die Reinigungsstation kann über Einrichtungen zum Säubern, beispielsweise Bürsten, Textilstreifen, Wasserdüsen (Hoch- und/oder Niederdruck), Luftdüsen und/oder Rütteleinrichtungen verfügen.

Das System kann über eine, oder mehrere Servicestationen verfügen. Die Servicestation kann über verschiedene Sensoren verfügen, welche die Anwesenheit und Positionierung des Rovers und der angebauten Arbeitsgeräte sowie die Zustände der Arbeitsgeräte detektieren und überwachen. Die Servicestation kann Einrichtungen zur Erweiterung des Funktionsumfanges der Arbeitsgeräte enthalten, welche für einen kontinuierlichen Betrieb nötig sein können, wie beispielsweise eine Einrichtung zum Be- und/oder Entladen, Schärfen und/oder Auswechseln einzelner Elemente oder des gesamten Arbeitsgeräts.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung eines bevorzugten Ausführungsbeispiels der erfindungsgemäßen Arbeitsvorrichtung anhand der Zeichnung zu verweisen. In Verbindung mit der Erläuterung des bevorzugten Ausführungsbeispiels anhand der Zeichnung werden auch im Allgemeinen bevorzugte Ausgestaltungen und Weiterbildungen der Lehre erläutert. In der Zeichnung zeigen
- Fig. 1: eine Systemarchitektur gemäß einem Ausführungsbeispiel der Erfindung,
- Fig. 2: Antriebseinheiten für eine Arbeitseinheit gemäß einem Ausführungsbeispiel der Erfindung,
- Fig. 3: eine Arbeitseinheit oder Arbeitsmaschine gemäß einem Ausführungsbeispiel der Erfindung und
- Fig. 4: ein Arbeitsgerät für eine Arbeitseinheit oder Arbeitsmaschine gemäß einem Ausführungsbeispiel der Erfindung.

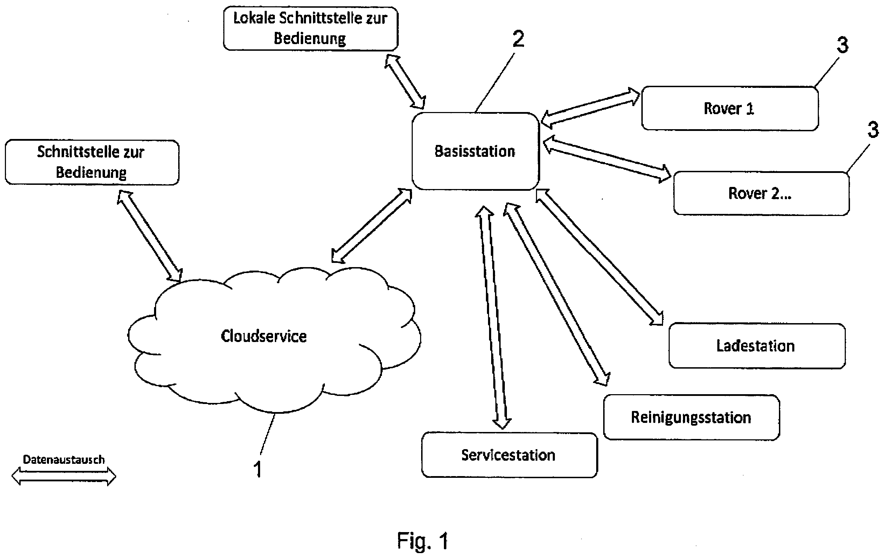

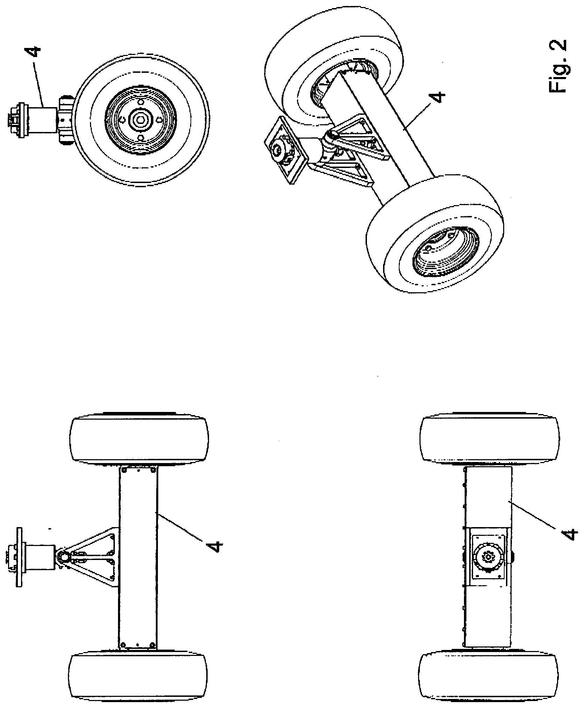

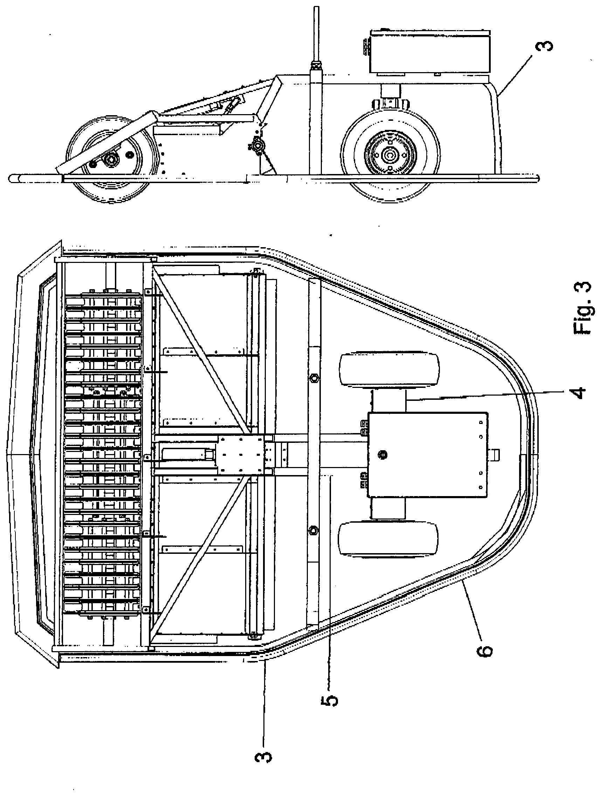

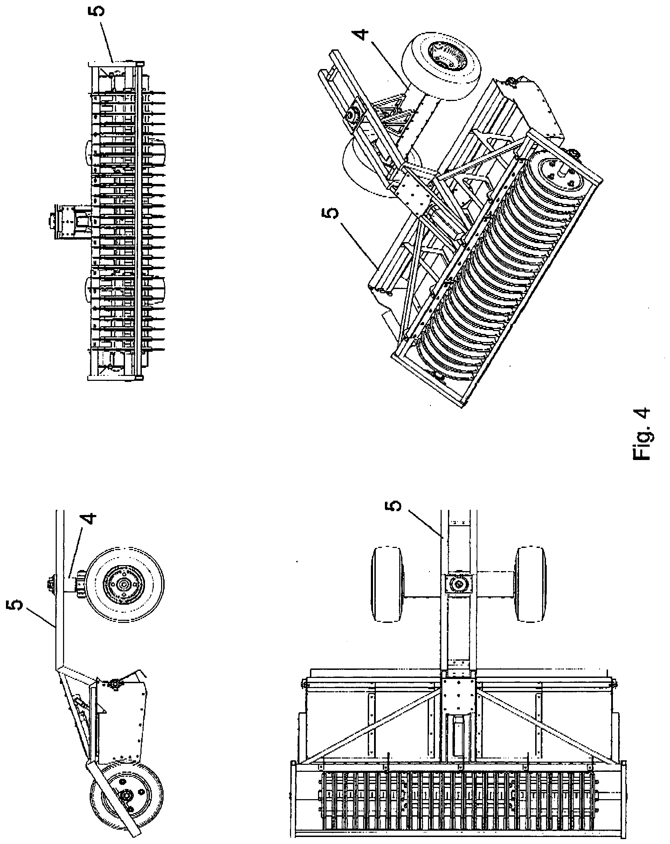

Im Folgenden werden Ausgestaltungen eines Ausführungsbeispiels der erfindungsgemäßen Arbeitsvorrichtung in Verbindung mit den Fig. 1-4 beschrieben.

### Systemarchitektur

Bei dem Ausführungsbeispiel befinden sich alle zum Betrieb des Systems notwendigen Daten in einer oder mehreren Datenbanken oder auf einem oder mehreren Servern, welcher oder welche mit dem Internet verbunden sind (Cloud). Hierdurch ist eine Cloudserviceeinrichtung 1 bereitgestellt. Aus dieser Datenbank oder diesen Datenbanken können Daten ausgegeben und eingelesen werden. Dieser Datenaustausch erfolgt zwischen dem EDV Gerät zur Bedienung - der Bedieneinrichtung - und der Cloud. Auf diesem Weg werden relevante Informationen, die zur Ausführung eines Arbeitsauftrages benötigt werden vom Nutzer an das System weitergegeben, beispielsweise Ort und Art der Bearbeitung, Zeitpunkt der Bearbeitung etc. Ebenso werden relevante Daten vom System an den Nutzer gemeldet, beispielsweise Systemzustand, Bearbeitungszustand, Fehler etc.

Ebenso erfolgt ein Datenaustausch zwischen der Cloud oder Cloudserviceeinrichtung 1 und der Basisstation 2. Die Cloudserviceeinrichtung 1 übermittelt dabei alle neuen, relevanten Daten, die zum Betrieb des Systems notwendig sind, beispielsweise Fahrbereiche, Arbeitsaufträge, Systemaktualisierungen, verbundene Rover etc. an die Basisstation 2. Die Basisstation 2 übermittelt entsprechend alle für den Nutzer, oder Hersteller relevanten Daten, beispielsweise abgeschlossene Arbeitsaufträge, Systemzustände, Warnungen, Fehler etc. in die Cloudserviceeinrichtung 1 oder Cloud. Außerdem kann über eine lokale Benutzerschnittstelle mit der Basisstation 2 kommuniziert werden.

Einer Basisstation 2 können ein oder mehrere Arbeitseinheiten 3, im Folgenden auch Rover genannt, zugeordnet sein. Zwischen der Basisstation 2 und den zugeordneten Rovern kann ein Datenaustausch über Funkverbindungen stattfinden. Hierbei übermittelt die Basisstation 2 relevante Daten, welche zum Betrieb des Systems benötigt werden, beispielsweise Fahrbereiche, Arbeitsaufträge, Korrekturdaten zur Positionierung etc., an die Rover. Die Basisstation 2 koordiniert dabei auch die mögliche Aufteilung eines Arbeitsauftrages auf mehrere Rover. Die einer Basisstation 2 zugeordneten Rover übermitteln an diese Basisstation 2 relevante Daten, beispielsweise Position, Roverzustand, Warnungen, Fehler etc., die zum Betrieb des Systems und zu statistischen Zwecken benötigt werden können.

Alle weiteren Komponenten wie beispielsweise elektrische Ladestation, Reinigungsstation oder Servicestationen können einer Basisstation 2 zugeordnet werden. Zwischen Basisstation 2 und zugeordneter Komponente kann ein Datenaustausch über Funkverbindungen kabelgebunden oder über Lichtwellenleiter erfolgen. Die Basisstation 2 kann der zugeordneten Komponente relevante Daten übertragen und von dieser relevante Daten empfangen.

### Komponentenbeschreibungen

### Basisstation 2

### Echtzeitfähigkeit

Die Basisstation 2 ist dadurch gekennzeichnet, dass sie die Möglichkeit besitzt, zeitkritische Daten in Echtzeit zu empfangen, zu verarbeiten und auszugeben.

### Datenauswertung

Die Basisstation 2 ist dadurch gekennzeichnet, dass sie eine stochastische Auswertung der von den zugeordneten Komponenten wie Rover, Ladestation etc. übermittelten Daten durchführen kann und die Ergebnisse dieser Auswertung in die Planung der Arbeitsaufträge, sowohl in bereits laufende, als auch in zukünftige, einfließen lassen kann.

Wird ein System beispielsweise zum Sammeln von Golfbällen auf einer Driving Range eingesetzt, so kann die Basisstation 2 auf Grundlage der vom Rover erfassten und übermittelten Daten eine Auswertung über die Verteilung der Bälle auf der Fläche der Driving Range erstellen und auf Basis dieser Verteilung die Arbeitsaufträge optimieren.

In einem weiteren Beispiel ist der Rover mit einem Antrieb 4 oder elektrischen Antriebsstrang mit mehreren Elektromotoren ausgestattet und übermittelt Daten zum Energieverbrauch der einzelnen Motoren an die Basisstation 2, welche durch Auswertung der Daten Rückschlüsse auf den Gesundheitszustand der Motoren ziehen kann und diese Informationen bei Bedarf an den Nutzer weitergeben kann.

### Kommunikation mit externen Geräten

Die Basisstation 2 ist dadurch gekennzeichnet, dass eine Kommunikation mit externen Geräten, die nicht zum beschriebenen System gehören, über frei konfigurierbare Schnittstellen möglich ist und die auf diese Weise erlangten Daten in die Planung der Arbeitsaufträge, sowohl in bereits laufende, als auch in zukünftige, einfließen lassen kann.

Wird ein System beispielsweise zum Sammeln von Golfbällen auf einer Driving Range eingesetzt, so kann die Basisstation 2 auf Grundlage der von Ballautomaten übermittelten Füllständen die Arbeitsaufträge derart anpassen, dass eine Optimierung der Füllstände stattfindet. In einem weiteren Beispiel kann die Basisstation 2 aufgrund einer gemeldeten Störung an einem Ballwaschautomaten die Arbeitsaufträge derart anpassen, dass alternative, betriebsbereite Ballwaschautomaten vom System genutzt werden, und gleichzeitig den Nutzer über die Anwendung zum Bedienen des Systems oder Bedieneinrichtung von der vorliegenden Störung in Kenntnis setzen.

### Fehlertoleranz

Die Basisstation 2 ist dadurch gekennzeichnet, dass die für den Betrieb des Systems relevanten Daten von der Cloudserviceeinrichtung 1 abgefragt und lokal gespeichert werden, so dass auch beim Ausfall der Cloudserviceeinrichtung 1 die bereits geplanten Arbeitsaufträge weiterhin bearbeitet werden können.

Die Basisstation 2 ist dadurch gekennzeichnet, dass die an die Rover vergebenen Arbeitsaufträge auch lokal simuliert werden können und damit auch bei vorübergehendem Ausfall einer Verbindung zu einem Rover die zukünftigen Arbeitsaufträge weiterhin geplant werden können.

Die Basisstation 2 ist dadurch gekennzeichnet, dass bei Störungen einzelner Rover die aktuellen und zukünftigen Arbeitsaufträge derart angepasst werden können, beispielsweise durch Verteilung auf andere zur Verfügung stehende Rover, dass die Arbeitsaufträge in optimaler Art und Weise erfüllt werden.

Wird beispielsweise ein System mit zwei Rovern auf einer Fläche eingesetzt und beide Rover haben einen Arbeitsauftrag und ein Rover meldet einen Defekt, so kann der Einsatz des funktionsfähigen Rovers derart gestaltet werden, dass ein bestmögliches Ergebnis des Arbeitsauftrags erreicht wird.

### Rover

### Selbstständigkeit

Der Rover ist dadurch gekennzeichnet, dass die für den Betrieb des Rovers relevanten Daten von der Basisstation 2 abgefragt und lokal gespeichert werden, so dass auch beim Ausfall der Basisstation 2 oder beim Ausfall der Verbindung zur Basisstation 2 die bereits geplanten Arbeitsaufträge zeitlich begrenzt weiter bearbeitet werden können.

### Gehäuse

Der Rover ist dadurch gekennzeichnet, dass er ein Gehäuse 6 besitzt, welches an definierten Stellen durch den Einsatz elektrisch nicht leitfähiger Materialien für elektromagnetische Wellen durchlässig ist und an definierten Stellen durch den Einsatz elektrisch leitfähiger Materialien für elektromagnetische Wellen undurchlässig ist. Der Rover ist weiter dadurch gekennzeichnet, dass er ein Gehäuse 6 besitzt, dessen Oberfläche als Sensor fungiert und eine Berührung und/oder Annäherung detektieren und überwachen kann. Dies ist durch eine Messung der Kapazität und/oder der Induktivität umgesetzt.

### Kinematik

Der Rover ist dadurch gekennzeichnet, dass er über mindestens einen Antrieb 4 oder eine Antriebseinheit verfügt, welche über zwei voneinander unabhängig angetriebene Räder verfügt, welche auf einer Rotationsachse liegen, wobei die Antriebseinheit um die Hochachse frei drehen kann, welche orthogonal zu der Rotationsachse der Räder steht und diese in der Mitte zwischen beiden Rädern schneidet. Dieser Drehachse ist eine Pendelachse unterlagert, welche senkrecht zu der Rotationsachse der Räder verläuft und ebenfalls senkrecht zur Hochachse und die Hochachse dabei schneidet. Das Gelenk der Hochachse ist dabei derart ausgeführt, dass Signal- und/oder Energieleitungen durch die Mitte des Gelenks hindurchgeführt werden können, womit durch geeignete Einrichtungen wie beispielsweise Schleifringübertrager eine ununterbrochene Drehung in die gleiche Richtung stattfinden kann. Das Gelenk der Hochachse, ebenso wie das Pendelgelenk, kann dabei derart ausgeführt werden, dass eine Dämpfung der Drehbewegung in Abhängigkeit von der Winkelgeschwindigkeit und/oder der Winkelbeschleunigung aufgebracht werden kann.

Durch die beschriebene Überlagerung der Gelenke ist es möglich, dass sich die Antriebseinheit eine Rotation um die Hochachse ausführt, wobei keine translatorische Bewegung stattfindet, sich die Antriebsräder jedoch nicht zwangsweise auf gleicher Höhe befinden müssen. Entsprechend kann die Antriebseinheit ein auch nur an einem Rad auftretendes Hindernis überwinden und hat damit eine besonders gute Geländegängigkeit.

Durch die beschriebene Kinematik findet bei der Drehung der Antriebseinheit, auch bei einer überlagerten tranlatorischen Bewegung, also einer Lenkbewegung während der Fahrt, kein Schlupf zwischen den Rädern und dem Untergrund statt, weil sich die Ausrichtung der Antriebseinheit entsprechend dem Lenkwinkel einstellt.

Die beschriebene Kinematik ist besonders vorteilhaft, weil die oben aufgeführten Vorteile durch wenige, einfache, bewegliche Teile erreicht werden und die Kinematik auch ohne den Einsatz von Federn und/oder Dämpfern ihre volle Funktionalität besitzt.

Der Rover ist dadurch gekennzeichnet, dass er eine Antriebsachse mit beschriebener Kinematik besitzt und ein Arbeitsgerät 5 schiebt, wodurch eine dauerhafte Regelung erforderlich ist, um diesen metastabilen Zustand aufrecht zu erhalten. Durch das Schieben des Arbeitsgerätes 5 ist eine Bearbeitung der Fläche möglich, ohne dass zuvor die Eigenschaft der Fläche oder der Dinge, die sich auf der Fläche befinden, durch das Überfahren mit den Reifen verändert wurde.

### Radarsensorik

Der Rover ist dadurch gekennzeichnet, dass er über eine Radarsensorik verfügt, welche genutzt wird, um Kollisionen mit Hindernissen zu vermeiden, die Umgebung wahrzunehmen und über einen Abgleich mit entsprechenden Daten auf einer Karte die Positionierung zu ermöglichen oder zu unterstützen. Ebenso kann mit den erfassten Daten eine Karte erstellt werden oder eine bereits vorhandene Karte mit zusätzlichen Daten erweitert werden.

### Pfadplanung

Der Rover ist dadurch gekennzeichnet, dass er die Möglichkeit besitzt, willkürliche Bahnen und Pfade zu fahren, wobei Abweichungen von der geplanten Position selbstständig ausgeregelt werden und die geplanten Bahnen und Pfade bei neu aufgetretenen Hindernissen selbstständig neu geplant werden, um das Ziel bestmöglich erreichen zu können. Die Pfadplanung ist dabei derart gestaltet, dass das reale kinematische Modell des Rovers samt Arbeitsgerät 5 modelliert ist und bei der Planung berücksichtigt werden kann. Hierdurch kann die Agilität der Antriebseinheit 3 und/oder des Arbeitsgerätes 5 ausgenutzt werden, wodurch auch enge, oder schlecht zugängliche Flächen befahren werden können. Zusätzlich besitzt die Pfadplanung die Möglichkeit, die Fahrtrichtung des Rovers beim Manövrieren falls nötig umzukehren.

### Virtuelle Begrenzung ohne physische Eingriffe

Der Rover ist dadurch gekennzeichnet, dass eine Begrenzung des Verfahrbereichs ohne Anbringung physischer Hindernisse wie beispielsweise Zäune oder Poller oder Ähnliches oder umschließender Signaleinrichtungen, beispielsweise Induktionsschleifen, Lichtschranken, Leuchtfeuer oder Ähnliches, sondern über eine Begrenzung über geografische Koordinaten erfolgen kann. Hierfür werden auf einer virtuellen Karte Bereiche mit Hilfe von Polylinien erfasst und den erfassten Bereichen dann weitere Eigenschaften zugewiesen, beispielsweise Fahrbereich, kein Fahrbereich etc. Der Rover bestimmt seine aktuelle Position mit Hilfe der zur Verfügung stehenden Sensorik, beispielsweise GNSS, Odometrie etc., wobei die Genauigkeit der gelieferten Daten mit Hilfe einer Kovarianzmatrix ermittelt werden kann. Alle zur Positionsbestimmung verwendeten Daten werden mit der zugehörigen Kovarianzmatrix in einem Kalmanfilter verechnet, womit die aktuelle Position mit der zugehörigen Standardabweichung ermittelt werden kann. Der entsprechend zulässige Arbeitsbereich des Rovers wird automatisch an die zur Verfügung stehende Genauigkeit der Positionierung angepasst, sodass zu jeder Zeit gewährleistet ist, dass das System nur innerhalb des zulässigen Bereiches seine Arbeit verrichtet und den Bereich nicht verlassen kann.

### Selbstständige Anpassung der virtuellen Karte an die tatsächlichen Gegebenheiten

Der Rover ist dadurch gekennzeichnet, dass er die von der Basisstation 2 zur Verfügung gestellte Karte um die im Betrieb gefundenen Hindernisse oder auch weiteren Informationen erweitern kann, die mit zusätzlichen Informationen versehene Karte wieder an die Basisstation 2 übermitteln kann und auf diesem Weg auch anderen Rovern, welche die Fläche noch nicht befahren haben, bereits aktuelle Informationen zukommen lassen kann.

### Lokalisierung mittels Funktechnologien

Der Rover ist dadurch gekennzeichnet, dass zur Lokalisierung auf einer Fläche auch Funktechnologien wie beispielsweise WLAN, Bluetooth, GNSS, oder Andere verwendet werden können.

### Umgebungserfassung mit optischen Sensoren

Der Rover ist dadurch gekennzeichnet, dass er über verschiedene optische Sensoren verfügen kann, wie beispielsweise Kameras oder Tiefenkameras, welche während des Betriebs Daten von der Umgebung sammeln können und vom Rover abhängig vom Arbeitsauftrag analysiert werden können. Diese Daten können zusammen mit anderen Daten wie beispielsweise Uhrzeit oder Standort der Aufnahme vom Rover an die Basisstation 2 übertragen werden.

### Arbeitsgerät - Sammelrolle

Ein Arbeitsgerät 5 kann eine Sammelrolle aufweisen. Es sind Einrichtungen zum Aufsammeln runder oder annähernd runder Dinge bekannt, welche aus mehreren Scheiben mit gleichem Durchmesser bestehen, welche konzentrisch mit definiertem Abstand zueinander angeordnet sind und untereinander derart verbunden sind, dass sie sich nicht gegeneinander verdrehen können. Diese Einrichtungen besitzen eine Bohrung, die sich entlang der Rotationsache erstreckt und in Verbindung mit einer durchgesteckten Achse als Gleitlagerung fungiert. Ebenso sind Einheiten bekannt, bei denen die Scheiben auf der durchgesteckten Achse klemmen und bei denen die Achse zum Ermöglichen einer Rotation an beiden Enden in einem Wälzlager aufgenommen ist. Diese Einrichtungen werden über den Boden geschoben oder gezogen und klemmen beim Überrollen eines geeigneten Gegenstandes diesen ein. Die Rotation der Einrichtung erfolgt dabei durch die Reibung zwischen den Scheiben und dem Boden. Auswerfer, die zwischen zwei Scheiben positioniert sind, erzeugen einen Widerstand, dem der eingeklemmte Gegenstand durch Herausspringen entkommen kann. Durch geeignete Anordnung der Auswerfer in der oberen Hälfte der Sammeleinrichtung und entsprechende Positionierung eines Auffangbehälters können die Gegenstände effektiv eingesammelt werden.

### Geteilte Sammelrolle

Die Sammelrolle kann dadurch gekennzeichnet sein, dass sie auf einer wälz- oder gleitgelagerten Achse aufgebracht ist, wobei die Sammelrolle aus mindestens zwei eigenständigen Sammeleinrichtungen besteht, welche über Gleit- oder Wälzlagerungen auf der beschriebenen Achse gelagert sind und sich unabhängig voneinander bewegen können. Durch diese Anordnung kann ein reduzierter Widerstand beim Drehen der Sammeleinrichtung um einen Punkt auf der Sammelachse um die Hochachse erreicht werden, was beispielsweise bei der Kurvenfahrt vorteilhaft ist. Ebenso reduziert sich bei dieser Anordnung der Schlupf zwischen den Scheiben und dem Untergrund, der die Scheiben antreibt, so dass eine höhere Energieeffizienz ermöglicht wird.

### Reibungsminimierte Sammelrolle

Die Sammelrolle ist dadurch gekennzeichnet, dass sie über eine reibungsminimierte Lagerung verfügt, womit das durch die Reibung zwischen Scheiben und Boden erzeugte Drehmoment effektiv zum Auswerfen der gesammelten Gegenstände zur Verfügung steht und damit seltener zu Blockaden der Sammeleinrichtung führt. Zusätzlich wird die Energieeffizienz des Systems erhöht.

### Weiterer Auswerferkamm der entgegen der Sammelrichtung steht

Die Sammelrolle ist dadurch gekennzeichnet, dass sie zusätzlich zu der benötigten Auswerfereinrichtung, welche die gesammelten Gegenstände in das Sammelbehältnis führt, über eine weitere Auswerfereinrichtung verfügt, welche entgegen der für den Sammelbetrieb notwendigen Drehrichtung angebracht ist und nicht in ein Sammelbehältnis führt. Damit ist es möglich auftretende Blockaden durch Bewegung entgegen der Sammelrichtung zu lösen. Ebenso kann die Sammeleinrichtung über Gegenstände fahren, ohne dass ein Sammelvorgang stattfindet, was beispielsweise gewünscht ist, wenn das Sammelbehältnis bereits gefüllt ist.

### Erkennen von Blockaden

Die Sammeleinrichtung ist dadurch gekennzeichnet, dass sie über Sensoren verfügt, welche eine Blockade der Sammeleinrichtung erkennen können. Diese Sensoren können beispielsweise optische Sensoren wie Kameras, aber auch induktive, kapazitive, magnetische oder andere Sensoren sein. Die von den Sensoren gesammelten Daten können von der Sammeleinrichtung über eine Schnittstelle an andere Systeme übertragen werden. Dies ist vor Allem bei automatischen Systemen vorteilhaft, um Störungen frühzeitig zu erkennen und zu beheben.

### Ausführungsbeispiele

- Die mindestens eine Arbeitseinheit 3 kann als autonome, mobile Arbeitsmaschine ausgebildet sein. Sie kann folgende angekoppelte Arbeitsgeräte 5 oder Komponenten aufweisen:
   ∘ angebaute Sammeleinrichtung oder angebaute Komponente:
      ∘ zum Aufsammeln runder Gegenstände, beispielsweise Bälle
      ∘ zum Einsammeln von auf dem Boden liegenden landwirtschaftlichen Erzeugnissen
      ∘ zum Ausbringen von Saatgut, Düngemittel, weiteren Hilfsstoffen etc.
      ∘ zum Ausbringen von Setzlingen, auch in der Forstwirtschaft
      ∘ zum Einsammeln von Unrat
      ∘ zum Reinigen von Stränden
      ∘ zum Mähen von Grünflächen
      ∘ zum Kehren befestigter Flächen
      ∘ zum Schneeräumen befestigter Flächen
      ∘ zum Räumen von Mienen
      ∘ zum Transport von Ausrüstung
      ∘ zum Transport von Messmitteln
      ∘ zum Transport von Manipulatoren

Im Rahmen weiterer Ausführungsbeispiele kann die Arbeitsvorrichtung und im Konkreten die mindestens eine mobile Arbeitseinheit zum Beleuchten und/oder Bestrahlen mit elektromagnetischer Strahlung, insbesondere im UV-, IR- und sichtbaren Bereich, ausgebildet sein. Die Beleuchtung kann einerseits zum Beleuchten der Umgebung der Arbeitseinheit dienen. Des Weiteren kann eine derartige Bestrahlung die Pflanzengesundheit in einem bepflanzten Bereich fördern. Beispielsweise in Sportstadien oder sonstigen Veranstaltungsstadien kann das Gras zum Wachstum angeregt werden. Bisher erfolgt dies über separat aufzubauende große Beleuchtungsanlagen oberhalb der kompletten Fläche eines Stadions. Mit der erfindungsgemäßen Arbeitsvorrichtung würde der Auf- und Abbau solcher Anlagen entfallen und die mobilen Arbeitseinheiten könnten beispielsweise während der Nacht oder in sonstigen ungenutzten Zeiten des Stadions über entsprechende Flächen fahren. Mittels einer IR-Strahlung kann wachstumsfördemde Wärme auf Pflanzen abgegeben werden.

Häufig werden in solchen Stadien auch große Ventilatoren eingesetzt, um Staunässe und damit verbundenes Pilzwachstum zu reduzieren. Insoweit könnte eine mobile Arbeitseinheit mit einem Belüftungsgerät oder Ventilationsgerät als Arbeitsgerät ausgestattet werden, um eine einfache Belüftung einer entsprechenden Fläche zu gewährleisten.

Hinsichtlich weiterer vorteilhafter Ausgestaltungen der erfindungsgemäßen Arbeitsvorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass das voranstehend beschriebene Ausführungsbeispiel lediglich zur Erörterung der beanspruchten Lehre dient, diese jedoch nicht auf das Ausführungsbeispiel einschränkt.

### Bezugszeichenliste

- 1: Cloudserviceeinrichtung
- 2: Basisstation
- 3: Arbeitseinheit
- 4: Antrieb
- 5: Arbeitsgerät
- 6: Gehäuse

## Patentansprüche

1. Arbeitsvorrichtung, insbesondere zur Durchführung einer oder mehrerer Arbeiten im Außeneinsatz, mit einer Bedieneinrichtung, einer Cloudserviceeinrichtung (1), einer Basisstation (2) und mindestens einer mobilen Arbeitseinheit (3), wobei zum Betrieb der Arbeitsvorrichtung und/oder zur Steuerung der mindestens einen Arbeitseinheit (3) erforderliche Daten und/oder Parameter von der Bedieneinrichtung über eine erste Kommunikationsverbindung an die Cloudserviceeinrichtung (1) übertragbar sind, wobei die Daten und/oder Parameter von der Cloudserviceeinrichtung (1) an die Basisstation (2) und Arbeitsdaten von und/oder bezüglich der mindestens einen Arbeitseinheit (3) von der Basisstation (2) zu der Cloudserviceeinrichtung (1) über eine zweite Kommunikationsverbindung übertragbar sind und wobei ein geeigneter Datenaustausch hinsichtlich der Daten und/oder Parameter und/oder der Arbeitsdaten zwischen der Basisstation (2) und der mindestens einen Arbeitseinheit (3) über eine dritte Kommunikationsverbindung realisiert ist.

2. Arbeitsvorrichtung nach Anspruch 1, **dadurch gekennzeichnet, dass** mindestens eine der ersten, zweiten und dritten Kommunikationsverbindungen und vorzugsweise sämtliche Kommunikationsverbindungen drahtlos, kabelgebunden oder über eine Lichtwellenleitung und weiter vorzugsweise bidirektional realisiert ist oder sind.

3. Arbeitsvorrichtung nach Anspruch 1 oder 2, **dadurch gekennzeichnet, dass** die Bedieneinrichtung ein mobiles oder nicht mobiles Endgerät ist, wobei die Bedieneinrichtung an der Basisstation (2), an der mindestens einen Arbeitseinheit (3) oder an einer anderen Komponente der Arbeitsvorrichtung angeordnet und/oder zur Datenübertragung mit dem Internet ausgebildet sein kann.

4. Arbeitsvorrichtung nach einem der Ansprüche 1 bis 3, **dadurch gekennzeichnet, dass** die Basisstation (2) und/oder die mindestens eine Arbeitseinheit (3) ein GNSS, Globales NavigationsSatellitenSystem, zur Positionsbestimmung der Basisstation (2) und /oder der mindestens einen Arbeitseinheit (3) und/oder eine Schnittstelle zum Internet und/oder mindestens einen Sensor zur Detektion insbesondere einer Temperatur, einer Windgeschwindigkeit, einer Niederschlagsmenge, einer Umgebungsfeuchte oder weiterer Umgebungsparameter aufweist.

5. Arbeitsvorrichtung nach Anspruch 4, **dadurch gekennzeichnet, dass** mindestens ein über den mindestens einen Sensor detektierter Umgebungsparameter bei der Steuerung der mindestens einen Arbeitseinheit (3) berücksichtigt wird.

6. Arbeitsvorrichtung nach einem der Ansprüche 1 bis 5, **dadurch gekennzeichnet, dass** die mindestens eine Arbeitseinheit (3) einen Antrieb (4) und/oder mindestens eine Kopplungseinrichtung zum Ankoppeln mindestens eines oder verschiedener Arbeitsgeräte (5) aufweist.

7. Arbeitsvorrichtung nach einem der Ansprüche 1 bis 6, **dadurch gekennzeichnet, dass** die mindestens eine Arbeitseinheit (3) mindestens ein angekoppeltes Arbeitsgerät steuert und/oder zur Kommunikation mit diesem Arbeitsgerät (5) ausgebildet ist.

8. Arbeitsvorrichtung nach einem der Ansprüche 1 bis 7, **dadurch gekennzeichnet, dass** die Arbeitsvorrichtung eine elektrische Ladestation, eine Reinigungsstation, eine Servicestation und/oder weitere Funktionsstationen aufweist.

9. Arbeitsvorrichtung nach Anspruch 8, **dadurch gekennzeichnet, dass** die Ladestation und/oder die Reinigungsstation und/oder die Servicestation mindestens einen Sensor zur Detektion einer Anwesenheit und/oder Positionierung einer Arbeitseinheit (3) und/oder eines Ladezustands und/oder eines Funktionszustands eines Akkus einer Arbeitseinheit (3) aufweist.

10. Arbeitsvorrichtung nach einem der Ansprüche 1 bis 9, **dadurch gekennzeichnet, dass** sämtliche zum Betrieb der Arbeitsvorrichtung und/oder der mindestens einen Arbeitseinheit (3) erforderlichen Daten in der Cloudserviceeinrichtung (1) gespeichert sind.

11. Arbeitsvorrichtung nach einem der Ansprüche 1 bis 10, **dadurch gekennzeichnet, dass** für die Durchführung mindestens einer Arbeit erforderliche Daten und/oder Parameter in der Basisstation (2) gespeichert sind.

12. Arbeitsvorrichtung nach einem der Ansprüche 1 bis 11, **dadurch gekennzeichnet, dass** die Basisstation (2) eine Schnittstelle zum vorzugsweise bidirektionalen Datenaustausch aufweist und/oder
dass die Basisstation (2) für eine Koordination einer oder mehrerer durchzuführender Arbeiten hinsichtlich einer oder mehrerer Arbeitseinheiten (3) und/oder Arbeitsgeräte (5) ausgebildet ist.

13. Arbeitsvorrichtung nach einem der Ansprüche 1 bis 12, **dadurch gekennzeichnet, dass** die Arbeitsvorrichtung zum Einsammeln von runden Gegenständen, insbesondere von Golfbällen, ausgebildet ist, wobei vorzugsweise auf Basis erfasster und/oder übermittelter Arbeitsdaten von der mindestens einen Arbeitseinheit (3) eine Auswertung hinsichtlich der Verteilung der runden Gegenstände auf einer Fläche und weiter vorzugsweise eine Optimierung einer Verteilung von Arbeitsaufträgen an die mindestens eine Arbeitseinheit (3) oder mehrere Arbeitseinheiten (3) durch die Basisstation (2) durchführbar ist.

14. Arbeitsvorrichtung nach einem der Ansprüche 1 bis 13, **dadurch gekennzeichnet, dass** die mindestens eine Arbeitseinheit (3) eine Sammelrolle aufweist, wobei vorzugsweise die Sammelrolle aus zwei Sammeleinrichtungen ausgebildet ist.

15. Mobile Arbeitseinheit, insbesondere zum Einsatz bei einer Arbeitsvorrichtung nach einem der Ansprüche 1 bis 14, mit einem Antrieb (4) oder einer Antriebseinheit vorzugsweise nach der beschriebenen Kinematik ausgeführt.
